## Europäisches Patentamt
## European Patent Office
## Office européen des brevets

(11) Veröffentlichungsnummer : **0 080 535 B1**

(12) **EUROPÄISCHE PATENTSCHRIFT**

(45) Veröffentlichungstag der Patentschrift :
28.08.85

(51) Int. Cl.⁴ : **G 01 F 1/58**

(21) Anmeldenummer : 81201316.7

(22) Anmeldetag : 27.11.81

(54) Messwertaufnehmer für magnetisch-induktive Durchflussmessgeräte.

(73) Patentinhaber : RHEOMETRON AG
Schützenmattstrasse 43
CH-4003 Basel (CH)

(72) Erfinder : Bittner, Franz
Platenenstrasse 11
D-4130 Moers (DE)
Erfinder : Poortman, Boudewijn Jozef
Bosboom Toussaintstraat 16
NL-Dordrecht (NL)
Erfinder : Rademacher-Dubbick, Kristian
Waldsteige 14
D-4100 Duisburg 1 (DE)
Erfinder : Roskam, Abram Klaas
Larikslaan 36
NL-Sleeuwijk (NL)
Erfinder : Stevens, Udo
In der Ruhrau 21
D-4100 Duisburg 1 (DE)
Erfinder : Tromp, Wouter Teunis
Christiaan Huygenstraat 17
NL-Sliedrecht (NL)
Erfinder : Beisler, Walter, Dr.rer.nat.
Heidelberger Strasse 91
D-6140 Bensheim (DE)
Erfinder : Bock Sigfried
Nelkenstrasse 17
D-6800 Mannheim 71 (DE)
Erfinder : Bertsch, Hermann
Offenburger Strasse 84
D-6800 Mannheim 61 (DE)

(74) Vertreter : Ackmann, Günther, Dr.-Ing.
Claubergstrasse 24 Postfach 10 09 22
D-4100 Duisburg 1 (DE)

(43) Veröffentlichungstag der Anmeldung :
08.06.83 Patentblatt 83/23

(45) Bekanntmachung des Hinweises auf die Patenterteilung : 28.08.85 Patentblatt 85/35

(84) Benannte Vertragsstaaten :
AT BE CH DE FR GB IT LI LU NL SE

(56) Entgegenhaltungen :
EP-A- 0 047 342
DE-A- 2 119 705
DE-A- 2 950 039
DE-B- 1 098 727
US-A- 3 750 468

Jouve, 18, rue St-Denis, 75001 Paris, France

**Beschreibung**

Die Erfindung betrifft einen Meßwertaufnehmer für magnetisch-induktive Durchflußmeßgeräte, bestehend aus einem keramischen Meßrohr, welches in einem Stahlgehäuse angeordnet und an zwei diametral gegenüberliegenden Seiten mit Meßelektroden, die jeweils mit einem Schaft radial durch das Meßrohr führen und an diesem befestigt sind, sowie mit auf dem Meßrohr angeordneten Magnetspulen versehen ist. Weiterhin befaßt sich die Erfindung mit einem Verfahren zur Befestigung von Meßelektroden und anderen stromleitenden Bauteilen an dem keramischen Meßrohr eines solchen Meßwertaufnehmers.

Bestandteil magnetisch-induktiver Durchflußmeßgeräte ist ein rohrförmiger Meßwertaufnehmer, der zwischen den Anschlußflanschen einer Rohrleitung befestigt wird und durch den eine leitfähige Flüssigkeit quer zur Richtung eines Magnetfeldes strömt. Die der Strömungsgeschwindigkeit proportionale Spannung wird an zwei Meßelektroden abgegriffen und über Stromleiter einem Meßwertumformer zugeführt.

In der Regel besteht das Meßrohr des Meßwertaufnehmers aus einem Kunststoffrohr oder einem Metallrohr, dessen Innenmantel mit einer elektrisch isolierenden Beschichtung versehen ist. Aus der US-A-3 750 468 ist eine Ausführung bekannt, bei der in ein Meßrohr aus Titan als Isolierschicht ein dünnes Rohr aus Aluminiumoxid eingeschrumpft ist, und metallische Elektroden mit einem Dichtungsring in eine Bohrung eingesetzt sind, wobei deren Rückfläche an einer metallisierten Fläche des Aluminiumoxidrohres angeschweißt ist. Bei der Ausführung nach der DE-A-2 950 039 bestehen die Elektroden aus pulver- oder faserförmigen Kohlenstoff-, Graphit- oder Metallteilchen, welche im Elektrodenbereich in die elektrisch isolierende Auskleidung des Meßrohres eingebettet sind. Meßwertaufnehmer mit einem die mechanischen Kräfte aufnehmenden Metallrohr und der erforderlichen Isolierung des Innenmantels sind jedoch umständlich und teuer im Aufbau.

Anderseits ist bereits ein keramisches Meßrohr vorgeschlagen worden, welches die Vorteile einer elektrischen Isolierung und Korrosionsbeständigkeit bietet und als ein die mechanischen Kräfte aufnehmendes, selbsttragendes Bauteil ausgebildet ist. Bei der Ausführung nach der DE-A-2 330 593 ist ein in der Art von Porzellan-Elektroisolatoren hergestelltes Meßrohr vorgesehen, an dessen glasiertem Innenmantel die Elektroden aufgebrannt und mit Leitungsdrähten versehen sind, die durch radiale Bohrungen führen. Die Flansche sind mit einer umlaufenden Schulter versehen, gegen welche eine von außen umgelegte Blechhülle anliegt. Diese Ausführung hat jedoch den Nachteil, daß die radialen Bohrungen im keramischen Meßrohr Schwachzonen bilden, die beim Durchströmen von unter hohem Druck stehenden Flüssigkeiten zu Rissen und Zerstörungen des Scherbens führen. Auch ist durch das Aufbrennen der Meßelektroden am glasierten Innenmantel eine völlige Abdichtung nicht gewährleistet. Die auf dem keramischen Scherben aufgetragene Glasur wird häufig auch wegen unterschiedlicher Wärmeausdehnungen und Spannungen reißen, so daß die unter hohem Druck stehende Flüssigkeit durch die Poren des Scherbens nach außen dringen kann. Weiterhin ist das aus Porzellan bestehende Meßrohr des Meßwertaufnehmers äußerst empfindlich gegen Schlag- und Stoßeinwirkung und vermag Zugspannungen nur in geringem Umfang aufzunehmen. Solche Porzellanmassen weisen auch keine gute Beständigkeit gegen Temperaturwechsel auf, wie sie in Verbindung mit zu messenden heißen Flüssigkeiten auftreten können. Für unter hohem Druck stehende, sowie aggressive und heiße Flüssigkeiten ist ein solcher Meßwertaufnehmer daher nicht geeignet. Um einen dichten Einbau der Meßelektroden in ein keramisches Meßrohr zu erhalten, ist in der DE-B-1 098 727 vorgeschlagen worden, die Elektrode als Hohlzylinder mit verstärktem Boden auszubilden und in einer Bohrung des Meßrohres mit einer Glasmasse einzuschmelzen, deren Ausdehnungskoeffizient zwischen dem des Elektrodenmaterials und dem des Keramikrohres liegt. Auch bei dieser umständlichen Ausführung ist eine beständige Abdichtung nicht gewährleistet, da die vorgesehene Glasmasse bei Temperaturwechsel und Stoß- und Schlageinwirkungen zu Rissen führt und gegen zahlreiche Medien unbeständig ist.

Weiterhin ist aus der EP-A-00 47 342 (Stand der Technik nach Art. 54 (3) EPÜ) ein Meßwertaufnehmer bekannt, bei dem ein die Meßelektroden aufnehmendes Meßrohr aus Kunststoff oder Keramik axial in ein rohrförmiges Stahlgehäuse einsteckbar ausgebildet ist und die Magnetspulen von außen her in radial durch das Gehäuse führende Ausnehmungen eingeführt sind und in Sackbohrungen des Meßrohres ragen. Die Meßelektroden sind in seitliche Bohrungen des Meßrohres eingeführt und verkittet. Diese Ausführung ist jedoch wegen der Anordnung seitlicher Ausnehmungen und Bohrungen praktisch nur für Meßrohre aus Kunststoff geeignet, nicht aber für solche aus Keramik.

Um den Polarisationswiderstand und die kapazitive Gegenwirkung an der Elektrodenfläche niedrig zu halten, empfiehlt die DE-A-21 19 705 auf diese eine Anstrichmasse, die Edelmetalle oder Edelmetallegierungen enthält, aufzubrennen. Diese Ausführung betrifft lediglich einen Überzug auf einer üblichen metallischen Elektrode zur Optimierung der elektrischen Elektrodeneigenschaften.

Bei Meßwertaufnehmern ist es weiterhin bekannt, zwischen dessen Meßrohr und den Anschlußflanschen der Rohrleitung Erdungsringe anzubringen, die mit der leitenden Flüssigkeit in Berührung stehen und unmittelbar geerdet oder mit dem geerdeten Metallgehäuse des Meßwertaufnehmers leitend verbunden sind. Diese Erdungsringe verlangen jedoch auf ihren beiden Seiten Dichtungsringe. Eine solche Ausbildung ist umständlich und führt häufig zu Lecks.

. Demgegenüber liegt der Erfindung die Aufgabe zugrunde, einen Meßwertaufnehmer der gattungsgemäßen Art mit einem besonders dichten und widerstandsfähigen keramischen Meßrohr zu entwickeln, welches auch für unter hohem Druck stehende, aggressive und heiße Flüssigkeiten geeignet ist, sowie eine erheblich verbesserte mechanische Festigkeit aufweist. Diese Erfindungsaufgabe schließt die Entwicklung eines besonders geeigneten Verfahrens zur Herstellung eines solchen keramischen Meßrohres ein.

Diese Aufgabe wird erfindungsgemäß durch ein Meßrohr aus einem dichtgebrannten keramischen Werkstoff, insbesondere aus Oxidkeramik, gelöst, in den der Schaft der jeweiligen Meßelektrode eingesintert ist.

Dem erfindungsgemäß ausgebildeten Meßrohr kommen zunächst die formgenaue Herstellbarkeit und alle günstigen Eigenschaften solcher keramischer Werkstoffe, wie hohe Scherbendichtigkeit, höhere Biegebruch- und Zugfestigkeit und die Nachbearbeitbarkeit des gebrannten Scherbens zugute. Durch die eingesinterten Schäfte der Elektroden ist nicht nur eine völlige Abdichtung im Bereich der Elektrodendurchführungen gewährleistet, sondern es werden auch durch Bohrungen o. dgl. verursachte Schwächezonen ausgeschlossen, so daß das keramische Meßrohr eine wesentlich höhere mechanische Festigkeit aufweist. Wegen der hohen mechanischen Festigkeit ist auch keine die Druck- und Biegefestigkeit erhöhende Ummantelung erforderlich. Der dichtgebrannte keramische Werkstoff hat eine so hohe Scherbendichtigkeit, daß der Scherben keine Flüssigkeit aufnimmt. Außerdem ist dieser keramische Werkstoff gegen viele chemisch-aggressive Flüssigkeiten widerstandsfähig, so daß der daraus hergestellte Meßwertaufnehmer einen erheblich größeren Anwendungsbereich hat. Auch heiße Flüssigkeit mit Temperaturen von über 300 °C können mit dem neuen Meßwertaufnehmer gemessen werden. Die Oberflächenrauhigkeit des Meßrohres erlaubt weiterhin die Anbringung von dünnen elektrischen Leiterbahnen zur Bildung von Erdungsringen und/oder Elektrodenableitungen.

Die als keramischer Werkstoff besonders geeignete Oxidkeramik ist ein im wesentlichen kieselsäurefreier Werkstoff, der aus Oxiden und Oxidverbindungen nach keramischen Verfahren hergestellt wird. Hierzu gehören vor allem Aluminiumoxid, aber auch Oxide des Berylliums, Magnesiums, Zirkons, Thoriums, Oxidverbindungen wie Magnesiumaluminium u. dgl. Geeignet. im Sinne der Erfindung sind aber auch alle anderen keramischen Werkstoffe mit gleichen oder ähnlichen Eigenschaften, auch wenn sie nicht unmittelbar zur Gruppe der Oxidkeramik gehören. Die pulverförmigen Rohstoffe werden durch Verdichtung, beispielsweise durch Stempelpressen oder isostatisches Pressen geformt und anschließend bei hohen Temperaturen gesintert, die von der Art des Rohstoffs abhängen. Das Sintern von Aluminiumoxid geschieht beispielsweise bei etwa 1 800 °C. Durch das Sintern wird das Pulverkonglomerat in einen festen Körper umgewandelt, wobei der Körper nicht schmilzt, oder nur Teilschmelzen auftreten.

Die in dem aus keramischem Werkstoff bestehenden Meßrohr eingesinterten Schäfte für die Elektroden sowie die Elektrodenformen können je nach den Abmessungen, insbesondere dem Innendurchmesser verschieden ausgebildet sein. Bei einem kleinen Innendurchmesser, bei dem die Elektrodenstellen am Innenmantel schwer zugänglich sind, besteht der Schaft zweckmäßig aus einem Röhrchen mit einem die Elektrodenfläche bildenden Boden. Sind die Elektrodenstellen zugänglich, kann der Schaft aus einem massiven Stift bestehen, der nach dem Einsintern mit einem die Elektrodenfläche bildenden, in einer Vertiefung am Innenmantel des Meßrohres einliegenden Plättchen, beispielsweise durch Vernieten verbunden ist. Die Schäfte und Elektroden bestehen vorzugsweise aus Platin oder Platinlegierungen. Doch sind auch andere leitenden Metalle geeignet, die ein Einsintern erlauben, sowie eine chemische Verbindung mit dem keramischen Werkstoff und eine Oxidation an ihren Elektrodenflächen ausschließen.

Die gute mechanische Festigkeit und Nachbearbeitbarkeit des keramischen Werkstoffes durch Schleifen ermöglicht eine besonders einfache und sichere Befestigung des Meßrohres in einem Stahlgehäuse, welches auch die Magnetspulen aufnimmt und eine Befestigung an den beiden Flanschen der Rohrleitung erlaubt. Dies geschieht dadurch, daß das Meßrohr mit den peripheren Mantelflächen der Flansche durch Schrumpfspannung in Bohrungen eines Stahlgehäuses befestigt ist. Dabei sind die peripheren Mantelflächen der Flansche zweckmäßig auf einen für den Schrumpfsitz geeigneten Außendurchmesser geschliffen. Diese Schrumpfbefestigung sichert das Meßrohr gegen ein Verdrehen und gegen axiale Verschiebung, so daß ein späteres Nachjustieren entfällt. Auch werden keine Halterungsbohrungen im Außenmantel für besondere Befestigungsklammern benötigt, welche die mechanische Festigkeit des Meßrohres beeinträchtigen würden. Durch diese Befestigungsart liegt das keramische Meßrohr geschützt innerhalb des Stahlgehäuses und die feste Schrumpfverbindung verhindert sogar einen Bruch des keramischen Werkstoffes, wenn der Meßwertaufnehmer herunterfällt oder auf ihn eine starke Stoß- oder Schlageinwirkung stattfindet. Schließlich dichtet die Schrumpfverbindung das Innere des Stahlgehäuses flüssigkeitsdicht gegen die peripheren Mantelflächen des Meßwertaufnehmers ab. Reicht diese Abdichtung in Extremfällen nicht aus, kann auch auf den peripheren Mantelflächen bzw.

Bohrungsflächen zusätzlich eine dünne Dichtungsmasse o. dgl. aufgebracht werden. Auch kann eine zusätzliche Befestigung der Flansche in den Bohrungen des Gehäuses durch Verkleben bzw. Verkitten für Meßwertaufnehmer vorgesehen sein, die durch heiße Flüssigkeiten auf Temperaturen erwärmt werden, bei denen der Schrumpfsitz herabgesetzt wird. Für einfache Ausführungen, bei denen kein Schrumpfsitz vorgesehen ist, kann die Befestigung auch durch ein Verkleben bzw. Verkitten erfolgen.

Der keramische Werkstoff, insbesondere die Oxidkeramik, besitzt wegen ihres polykristallinen Aufbaus auch bei völlig glatt wirkender Oberfläche eine Oberflächenrauhigkeit, die erfindungsgemäß zur Anbringung von elektrischen Leiterbahnen ausgenutzt wird, indem eine den Erdungsring bildende Leiterbahn auf einer stirnseitig den Innenmantel des Meßrohres erweiternden Fase angebracht und mit ein oder mehreren auf der Stirnfläche des Meßrohres radial angebrachten, dem Erdungsanschluß dienenden Leiterbahnen verbunden ist. Weiterhin besteht die Möglichkeit, auf dem Außenmantel des Meßrohres eine Leiterbahn anzubringen, welche mit dem Schaft einer Meßelektrode leitend verbunden ist und etwa um den halben Umfang bis zu einer neben der anderen Meßelektrode angeordneten Anschlußstelle für einen zu einem Meßwertumformer führenden Leitungsdraht reicht. Diese Leiterbahnen bestehen aus einer nur wenige Mikron dicken Metallschicht, die auf dem elektrisch isolierenden Keramikkörper fest verankert ist und die für verschiedene Zwecke bisher benötigten elektrischen Bau- und Verdrahtungsteile in Fortfall kommen läßt. Während Erdungsringe bisher besondere Bauteile darstellten, die mit Dichtungsringen auf beiden Seiten bei der Montage eingebaut werden mußten, sind sie erfindungsgemäß fester Bestandteil des Meßwertaufnehmers. Die nebeneinanderliegenden Anschlußstellen für die zum Meßwertumformer führenden Leitungsdrähte erleichtern die Verdrahtung. Bedarfsweise kann die an die eine Elektrode angeschlossene Leiterbahn mit einer Abschirmung versehen sein, um die Einwirkung von Störspannungen auszuschließen.

Für die Befestigung von Meßelektroden und anderen stromleitenden Bauteilen an einem keramischen Meßrohr eines Meßwertaufnehmers für magnetisch-induktive Durchflußmeßgeräte durch Befestigung eines Schaftes für jede Meßelektrode in einer radial durch den Mantel des Meßrohres führenden Lage sieht die Erfindung ein besonders geeignetes Verfahren vor, welches darin besteht, daß der Schaft jeder Meßelektrode in einem aus Keramikwerkstoff, insbesondere für Oxidkeramik, bestehenden ungebrannten Formling radial angeordnet und beim keramischen Brennen des Formlings eingesintert wird und daß anschließend auf das keramisch gesinterte Meßrohr eine Metallpulverpaste in Form von Leiterbahnen aufgetragen und durch nochmaliges Erhitzen des Meßrohres aufgebrannt wird.

Die Anordnung der Schäfte im ungebrannten Formling, der in der Keramik auch als Grünling bezeichnet wird, kann durch unmittelbares Einformen beim Verdichten des pulverförmigen Rohstoffs geschehen, oder es werden nach einer bevorzugten Methode in den gepreßten Formling Bohrungen eingearbeitet, in welche die Schäfte vor dem Brennen des Formlings eingeführt werden, wobei für eine dichte Anlage an die Rohstoffmasse Sorge zu tragen ist. Durch das keramische Brennen bei der für den oxidkeramischen Werkstoff üblichen Sintertemperatur, z. B. bei $Al_2O_3$ etwa 1 800 °C, werden die Schäfte dicht eingesintert. Die auf das gesinterte Meßrohr aufzutragende Metallpulverpaste für die Leiterbahnen kann beispielsweise aus einer Platinpulverpaste bestehen, die beim anschließenden Erhitzen auf etwa 800 °C eine dünne Metallschicht von mehreren Mikron bildet, wobei die Bindebestandteile der Paste verdampfen bzw. verbrennen und die Metallschicht sich in der mikrorauhen Oberfläche des Keramikkörpers verankert.

Die Ausbildung eines erfindungsgemäßen Meßwertaufnehmers und das hierfür vorgesehene Herstellungsverfahren wird beispielhaft anhand der Zeichnungen näher erläutert ; es zeigt :

Figur 1 den Grundaufbau eines Meßwertaufnehmers mit einem keramischen Meßrohr in einem Längsschnitt,

Figur 2 das keramische Meßrohr mit eingesinterten Elektrodenschäften in einem Längsschnitt,

Figur 3 den Gegenstand der Fig. 2 in einer Seitenansicht und teilweise geschnitten mit aufgebrannten Leiterbahnen,

Figur 4 den Gegenstand der Fig. 3 in einer Ansicht von der Stirnseite bzw. in einem Teilschnitt nach Linie I-I,

Figur 5 einen röhrchenförmigen Elektrodenschaft und

Figur 6 einen stiftförmigen Elektrodenschaft.

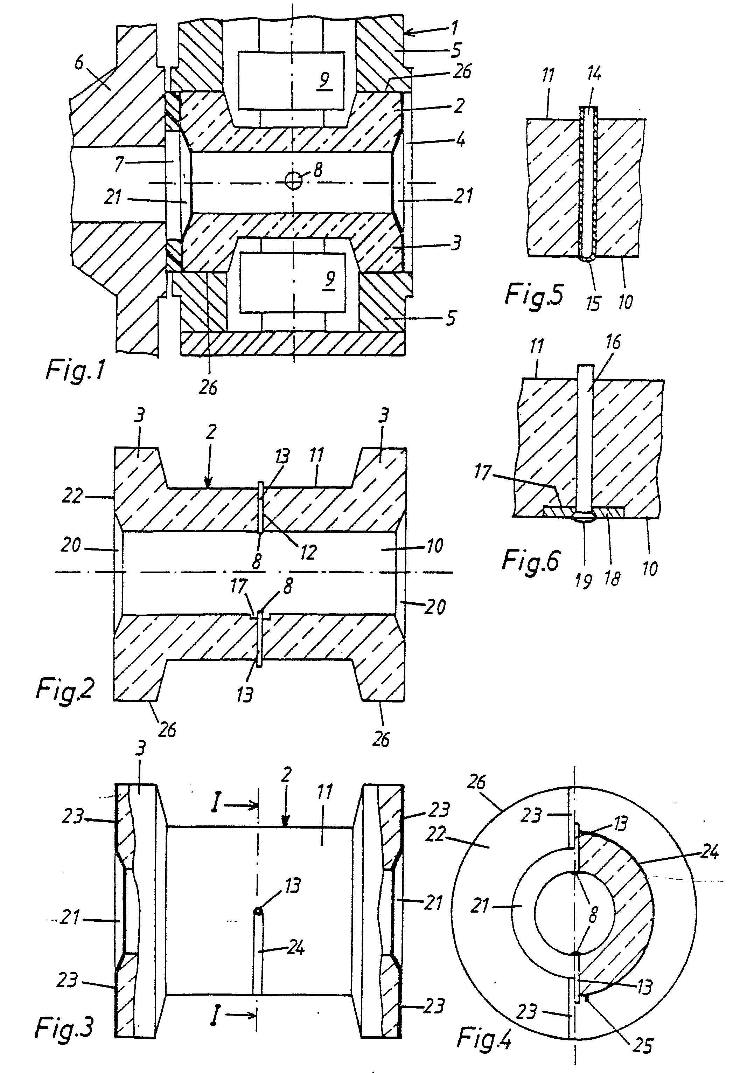

Der in Fig. 1 in seinem Grundaufbau dargestellte Meßwertaufnehmer 1 ist mit einem keramischen Meßrohr 2 aus Oxidkeramik ausgerüstet. Das Meßrohr 2 hat die Gestalt einer Zwirnsrolle mit radial nach außen weisenden Flanschen 3 an seinen beiden Enden. Die geschliffenen peripheren Mantelflächen 26 der beiden Flansche 3 sind durch Schrumpfspannung in Bohrungen 4 eines Stahlgehäuses 5 befestigt. Das Stahlgehäuse 5 kann beispielsweise aus Stahlguß bestehen. Der Meßwertaufnehmer 1 wird in üblicher Weise zwischen den Flanschen zweier Leitungsrohre 6 einer Rohrleitung befestigt, wobei zwischen die geschliffenen Stirnflächen 22 des keramischen Meßrohres 2 und den Anlageflächen der den Leitungsrohren 6 zugeordneten Flansche Dichtungsringe 7 vorgesehen sind. Die Verbindung zwischen dem Meßwertaufnehmer 1 und den Flanschen der Leitungsrohre 6 kann entweder durch eine unmittelbare Verschraubung erfolgen, oder bei kleineren Nennweiten besteht auch die Möglichkeit, den Meßwertaufnehmer 1 zwischen den Flanschen der Leitungsrohre 6 mittels Schraubbolzen o. dgl. einzuspannen.

Dem Meßwertaufnehmer 1 sind, wie auch Fig. 2 zeigt, zwei Meßelektroden 8 zugeordnet, die radial durch den Mantel des keramischen Meßrohres ragen und am Innenmantel 10 Elektrodenflächen bilden. Um 90° versetzt sind am Außenmantel 11 des keramischen Meßrohres 2 diametral gegenüberliegend zwei Magnetspulen 9 angeordnet. Diese können beispielsweise mit Polschuhen am Außenmantel 11 des keramischen Meßrohres 2 anliegen. Das Stahlgehäuse 5 dient außerdem dem magnetischen Rückfluß.

Das keramische Meßrohr 2 wird aus keramischen Rohstoffen, insbesondere für Oxidkeramik, hergestellt. Der pulverförmige und unplastische Rohstoff wird in bekannter Weise mit Hilfe von Stempelpressen oder durch isostatisches Pressen verdichtet. Bei dieser Formgebung ist das Maß der Schrumpfung zu berücksichtigen, die beim späteren Sintervorgang in Erscheinung tritt. In den verdichteten und geformten, aber noch ungebrannten Formling werden zwei radiale Bohrungen 12 eingebracht, in welche dann je ein Schaft 13 aus Platin eingesteckt wird. Bei kleineren Innendurchmessern des keramischen Meßrohres wird vorzugsweise die in Fig. 5 gezeigte Ausführungsform gewählt, bei der der Schaft 13 als Röhrchen 14 ausgebildet ist, das einen geschlossenen Boden 15 aufweist. Dieses Röhrchen 14 wird so in die Masse eingesteckt, daß der Boden 15 nach dem Sintern etwa fluchtend zum Innenmantel 10 des keramischen Meßrohres 2 verläuft. Der Boden 15 bildet bei dieser Ausführungsform die Elektrodenfläche. Anstelle des Röhrchens 14 kann wahlweise auch ein massiver Stab oder Stift verwendet werden. Der Schaft 13 bzw. das Röhrchen 14 bestehen aus Platin oder einem anderen Metall, welches beim nachfolgenden Sintern der Keramik keine chemische Verbindung mit dem keramischen Werkstoff eingeht und auch an seiner Oberfläche bei den hohen Temperaturen nicht oxidiert.

Besteht der keramische Rohstoff beispielsweise aus Aluminiumoxid, erfolgt das Sintern des keramischen Meßrohres 2 bei etwa 1 800 °C. Für andere keramische Werkstoffe sind die entsprechenden Sintertemperaturen einzuhalten. Nach dem Sinterprozeß sind die Schäfte 13 gasdicht in den Mantel des keramischen Meßrohres 2 eingesintert. In Fig. 2 ist in der oberen Hälfte ein Schaft 13 gezeigt, der mit seinem nach innen weisenden Ende unmittelbar die Meßelektrode 8 bzw. Meßelektrodenfläche bildet. In der unteren Hälfte der Fig. 2 hingegen ist eine Ausführungsform gezeigt, bei der der Schaft 13 als massiver Stift 16 ausgebildet ist, wie es Fig. 6 in vergrößertem Maßstab zeigt. Hier ist am Innenmantel 10 neben der Bohrung 12 bzw. dem Stift 16 eine Vertiefung 17 eingeformt. Nach dem Sintern des keramischen Meßrohres ist der Schaft 13 bzw. Stift 16 dicht eingefrittet. Auf das nach innen weisende Ende des Schaftes 13 bzw. Stiftes 16 wird dann ein mit einer kleinen Bohrung versehenes Plättchen 18 aufgesteckt und in diese Vertiefung 17 eingelegt. Das durch das Plättchen 18 ragende Ende des Schaftes 13 bzw.

Stiftes 16 wird dann mit dem Plättchen 18 elektrisch leitend verbunden, beispielsweise zu einem Nietkopf 19 verformt. Bei dieser Ausführungsform bildet das Plättchen 18 die nach innen weisende Elektrodenfläche.

Nach dem keramischen Brennen des Meßrohres 2 werden die peripheren Mantelflächen 26 und die Stirnflächen 22 durch Schleifen nachbearbeitet. Der Außendurchmesser der peripheren Mantelfläche 26 ist dabei so zu wählen, daß er in den Bohrungen 4 des Stahlgehäuses 5 eine Befestigung durch Schrumpfspannung ermöglicht. Auf das keramisch gebrannte und anschließend geschliffene Meßrohr 2 werden dann Leiterbahnen 21, 23 und 24 durch Auftragen einer Platinpaste vorbereitet. Zwei Leiterbahnen 21 sind an den beiden Stirnenden des Meßrohres 2 im Bereich einer dort ausgeformten Fase 20 angeordnet. Beide Leiterbahnen bilden nach einer weiteren Wärmebehandlung Erdungsringe, die durch radial an den Stirnflächen 22 angeordnete Leiterbahnen 23 verbunden sind. Die Leiterbahn 24 schließt an dem Schaft 13 der einen Elektrode 8 an und ist über den halben Umfang des Außenmantels 11 bis etwa neben den gegenüberliegenden Schaft 13 der anderen Meßelektrode 8 geführt und endet dort an einer Anschlußstelle 25. Die Platinpaste kann in üblicher Weise aufgestrichen, aufgepreßt oder aufgedruckt werden. Anschließend wird das mit der Platinpaste versehene keramische Meßrohr in Abhängigkeit von der Beschaffenheit der Paste nochmals auf etwa 800 °C oder mehr erwärmt. Dabei verdichtet sich das in der Platinpaste enthaltene Metallpulver zu einem dichten Metallfilm, der in der leicht rauhen Oberfläche des keramischen Werkstoffes verankert ist und einen Stromleiter bildet.

Die an den Stirnenden des Meßrohres 2 angebrachten Leiterbahnen 21 dienen in Verbindung mit den radialen Leiterbahnen 23 der Erdung der leitenden Meßflüssigkeit, um Störspannungen abzuführen. Die über den Außenmantel 11 geführte Leiterbahn 24 hingegen erlaubt bei der Montage eine Verdrahtung an zwei dicht beieinanderliegenden Stellen, nämlich dem äußeren Ende des Schaftes 13 der einen Meßelektrode 8 und der Anschlußstelle 25 der anderen Meßelektrode 8.

Leiterbahnen dieser Verfahrensweise können auf dem keramischen Meßrohr 2 aber auch für andere Zwecke vorgesehen sein. So besteht beispielsweise die Möglichkeit, am Innenmantel 10 flächenförmige Leiterbahnen bzw. -elemente vorzusehen, welche mit einem Schaft 13 verbunden sind und Flächenelektroden bilden.

Die Meßelektroden 8 und Schäfte 13 bzw. Röhrchen 14 bzw. Stifte 16 können auch anders ausgebildet sein. So besteht beispielsweise die Möglichkeit, bei ausreichend großem Innendurchmesser Stifte 16 mit einem unmittelbar angeformten Elektrodenplättchen von innen her in den noch ungebrannten Formling einzustecken und mit einzusintern. Ebenso ist es auch möglich, die Schäfte 13 in ihren verschiedenen Ausführungsformen unmittelbar beim Verdichten und Formen des Meßrohres 2 aus dem keramischen Werkstoff einzuformen.

Das mit den Leiterbahnen 21, 23 und 24 versehene Meßrohr 2 wird mit den geschliffenen peripheren Mantelflächen 26 der Flansche 3 durch Schrumpfspannung in den Bohrungen 4 des Stahlgehäuses 5 befestigt. Für diese Befestigung wird das Stahlgehäuse 5 auf eine Temperatur von 300 °C oder mehr erwärmt und auf die Flansche 3 des kalten Meßrohres 2 aufgeschoben, wobei die gute Temperaturwechselbeständigkeit des oxidkeramischen Werkstoffs ausgenutzt wird. Ist bei einfacheren Ausführungen eine Befestigung durch Schrumpfspannung nicht erforderlich, kann der Außendurchmesser der peripheren Mantelflächen 26 so ausgebildet sein, daß er bei Normaltemperatur in die Bohrungen einsteckbar ist und die Befestigung durch Verkleben bzw. Verkitten der Lagerflächen erfolgt.

Zur Oxidkeramik gehören vor allem Aluminiumoxid, aber auch Oxide des Berylliums, Magnesiums, Zirkons, Thoriums, Oxidverbindungen wie Magnesiumaluminiumoxid. Geeignet im Sinne der Erfindung sind aber auch alle anderen keramischen Werkstoffe mit gleichen oder ähnlichen Eigenschaften, auch wenn sie nicht unmittelbar zur Gruppe der Oxidkeramik gehören, z. B. Steatit.

**Patentansprüche**

1. Meßwertaufnehmer für magnetisch-induktive Durchflußmeßgeräte, bestehend aus einem keramischen Meßrohr (2), welches in einem Stahlgehäuse (5) angeordnet und an zwei diametral gegenüberliegenden Seiten mit Meßelektroden (8), die jeweils mit einem Schaft (13) radial durch das Meßrohr (2) führen und an diesem befestigt sind, sowie mit auf dem Meßrohr (2) angeordneten Magnetspulen (9) versehen ist, dadurch gekennzeichnet, daß das Meßrohr (2) aus einem dichtgebrannten keramischen Werkstoff, insbesondere aus Oxidkeramik besteht, in welchen der Schaft (13) der jeweiligen Meßelektrode (8) dicht eingesintert ist.

2. Meßwertaufnehmer nach Anspruch 1, dadurch gekennzeichnet, daß der Schaft (13) aus einem Röhrchen (14) mit einem die Elektrodenfläche bildenden Boden (15) besteht.

3. Meßwertaufnehmer nach Anspruch 1, dadurch gekennzeichnet, daß der Schaft (13) aus einem Stift (16) besteht, der mit einem die Elektrodenfläche bildenden, in einer Vertiefung (17) am Innenmantel (10) des Meßrohres (2) einliegenden Plättchen (18) verbunden ist.

4. Meßwertaufnehmer nach einem der Ansprüche 1 bis 3, dadurch gekennzeichnet, daß das Meßrohr (2) mit peripheren Mantelflächen (26) der Flansche (3) durch Schrumpfspannung in Bohrungen (4) eines Stahlgehäuses (5) befestigt ist.

5. Meßwertaufnehmer nach Anspruch 4, dadurch gekennzeichnet, daß die peripheren Mantelflächen (26) der Flansche (3) auf einen für den Schrumpfsitz geeigneten Außendurchmesser geschliffen sind.

6. Meßwertaufnehmer nach einem der Ansprüche 1 bis 3, dadurch gekennzeichnet, daß das Meßrohr (2) mit den peripheren Mantelflächen (26) der Flansche (3) durch Verkleben bzw. Verkittung in Bohrungen (4) eines Stahlgehäuses (5) befestigt ist.

7. Meßwertaufnehmer nach einem der Ansprüche 1 bis 6, dadurch gekennzeichnet, daß eine einen Erdungsring bildende Leiterbahn (21) auf einer stirnseitig den Innenmantel (10) des Meßrohres (2) erweiternden Fase (20) angebracht und mit ein oder mehreren auf der Stirnfläche (22) des Meßrohres (2) radial angebrachten, dem Erdungsanschluß dienenden Leiterbahnen (23) verbunden ist.

8. Meßwertaufnehmer nach einem der Ansprüche 1 bis 7, dadurch gekennzeichnet, daß auf dem Außenmantel (11) des Meßrohres (2) eine Leiterbahn (24) angebracht ist, welche mit dem Schaft (13) einer der Meßelektroden (8) leitend verbunden ist und etwa um den halben Umfang bis zu einer neben der anderen Meßelektrode (8) angeordneten Anschlußstelle (25) für einen zu einem Meßwertgeber führenden Leitungsdraht reicht.

9. Verfahren zur Befestigung von Meßelektroden (8) und anderen stromleitenden Bauteilen an einem keramischen Meßrohr (2) eines Meßwertaufnehmers für magnetischinduktive Durchflußmeßgeräte durch Befestigung eines Schaftes (13) für jede Meßelektrode (8) in einer radial durch das Meßrohr (2) führenden Lage, dadurch gekennzeichnet, daß der Schaft (13) jeder Meßelektrode (8) in einem aus Keramikrohstoff, insbesondere für Oxidkeramik, bestehenden ungebrannten Formling radial angeordnet und beim keramischen Brennen des Formlings eingesintert wird und daß anschließend auf das keramisch gesinterte Meßrohr (2) eine Metallpulverpaste in Form von Leiterbahnen (21, 23. 24) aufgetragen und durch nochmaliges Erhitzen des Meßrohres (2) aufgebrannt wird.

10. Verfahren nach Anspruch 9, dadurch gekennzeichnet, daß für die Meßelektroden (8) und Schäfte (13) Platin oder Platinlegierungen und für die Leiterbahnen (21, 23, 24) eine Platinpulverpaste verwendet wird.

11. Verfahren nach Anspruch 9 oder 10, dadurch gekennzeichnet, daß das Meßrohr (2) aus dichtgesintertem Aluminiumoxid besteht und die Schäfte (13) bei etwa 1 800 °C eingesintert werden und die Platinpulverpaste bei Temperaturen von etwa 800 °C aufgebrannt wird.

12. Verfahren nach einem der Ansprüche 9 bis 11, dadurch gekennzeichnet, daß der ungebrannte Formling des Meßrohres (2) in einer Stempelpresse oder isostatisch gepreßt wird und anschließend radiale Bohrungen zum Einstecken der Schäfte (13) vorgesehen werden.

**Claims**

1. A measurement pick-up for magnetic-inductive fluid-flow meters, consisting of a ceramic measuring tube (2), which is disposed in a steel housing (5) and is provided, on two diametrically opposite sides, with measuring electrodes (8) each of which by means of a shank (13) extends radially through the measuring tube (2) and is secured thereto, and with magnet coils (9) disposed on the measuring tube (2), characterised in that the measuring tube (2) consists of an impermeably fired ceramic material, more particularly an oxide ceramic, in which the shank (13) of the associated measuring electrode (8) is sintered in sealing-tight relationship.

2. A measurement pick-up according to claim 1, characterised in that the shank (13) consists of a small tube (14) with a base (15) forming the electrode surface.

3. A measurement pick-up according to claim 1, characterised in that the shank (13) consists of a pin (16) connected to a small plate (18) forming the electrode surface and lying in a recess (17) on the inner surface (10) of the measuring tube (2).

4. A measurement pick-up according to any one of claims 1 to 3, characterised in that the measuring tube (2) is secured by peripheral generated surfaces (26) of the flanges (3) by shrink stress in bores (4) of a steel housing (5).

5. A measurement pick-up according to claim 4, characterised in that the peripheral generated surfaces (26) of the flanges (3) are ground to an outside diameter suitable for the shrink fit.

6. A measurement pick-up according to any one of claims 1 to 3, characterised in that the measuring tube (2) is sucured by the peripheral generated surfaces (26) of the flanges (3) by gluing or cementing in bores (4) in a steel housing (5).

7. A measurement pick-up according to any one of claims 1 to 6, characterised in that a printed conductor (21) forming an earthing ring is applied to a bevel (20) which at the end widens the inner generated surface (10) of the measuring tube (2) and is connected to one or more printed conductors (23) radially applied to the end face (22) of the measuring tube (2) and forming the earthing connection.

8. A measurement pick-up according to any one of claims 1 to 7, characterised in that a printed conductor (24) is applied to the outer generated surface (11) of the measuring tube (2) and is conductively connected to the shank (13) of one of the measuring electrodes (8) and over approximately half the periphery extends as far as a connection point (25) disposed next to the other measuring electrode (8), for a wire leading to a measurement transmitter.

9. A method of securing measuring electrodes (8) and other current-carrying components on a ceramic measuring tube (2) of a measurement pick-up for magnetic-inductive fluid-flow meters by fastening a shank (13) for each measuring electrode (8) in a position extending radially through the measuring tube (2), characterised in that the shank (13) of each measuring electrode (8) is disposed radially in an unfired moulding consisting of ceramic raw material, more particularly for oxide ceramic, and is sintered in during the ceramic firing of the moulding, and then a metal powder paste is applied in the form of printed conductors (21, 23, 24) to the ceramically sintered measuring tube (2) and is fired thereon by repeated heating of the measuring tube (2).

10. A method according to claim 9, characterised in that platinum or platinum alloys are used for the measuring electrodes (8) and shanks (13) and a platinum powder paste for the printed conductors (21, 23, 24).

11. A method according to claim 9 or 10, characterised in that the measuring tube (2) consists of impermeably sintered aluminium oxide and the shanks (13) are sintered at about 1 800 °C and the platinum powder paste is fired at temperatures of about 800 °C.

12. A method according to any one of claims 9 to 11, characterised in that the unfired moulding of the measuring tube (2) is pressed in a hand press or isostatically and then radial bores are provided for insertion of the shanks (13).

**Revendications**

1. Capteur de valeurs de mesure pour des débitmètres, constitué par un tube de mesure (2) en céramique, qui est disposé dans un boîtier en acier (5) et qui est pourvu, sur deux côtés diamétralement opposés, d'électrodes de mesure (8) qui passent respectivement par une tige (13) radialement à travers le tube de mesure (2), et qui sont fixées à ce dernier, ainsi que de bobines d'électroaimants (9) disposées sur le tube de mesure, caractérisé par le fait que le tube de mesure (2) est constitué par une matière céramique, en particulier par une céramique oxydée, soumise à une cuisson d'étanchéification, et dans lequel la tige (13) de l'électrode de mesure concernée (8) est emprisonnée, avec étanchéité, par frittage.

2. Capteur de valeurs de mesure selon la revendication 1, caractérisé par le fait que la tige (13) est constituée par un petit tube (14) avec un fond (15) qui constitue la surface d'électrode.

3. Capteur de valeurs de mesure selon la revendication 1, caractérisé par le fait que la tige (13) est constituée par une cheville (16) qui est reliée à une plaquette (18) qui constitue la surface d'électrode et qui est située dans une cavité (17) ménagée dans la paroi intérieure (10) du tube de mesure (2).

4. Capteur de valeurs de mesure selon l'une des revendications 1 à 3, caractérisé par le fait que le tube de mesure (2) est fixé par des surfaces périphériques (26) du flasque (3), par des contraintes de retrait, dans des perçages (4) ménagés dans le boîtier d'acier (5).

5. Capteur de valeurs de mesure selon la revendication 4, caractérisé par le fait que les surfaces périphériques (26) du flasque (3) sont meulées à un diamètre extérieur qui est approprié pour un ajustement frété.

6. Capteur de valeurs de mesure selon l'une des revendications 1 à 3, caractérisé par le fait que le tube de mesure (2) est fixé, dans des perçages (4) d'un boîtier en acier (5), par collage ou par scellement.

7. Capteur de valeurs de mesure selon l'une des revendications 1 à 6, caractérisé par le fait qu'une piste conductrice (21), qui constitue la bague de mise à la terre, est prévue sur un chanfrein (20) qui élargit frontalement l'enveloppe intérieure (10) du tube de mesure (2), et est reliée à une ou plusieurs pistes conductrices (23) prévues radialement sur la surface frontale (22) du tube de mesure (2), et servant de borne de mise à la terre.

8. Capteur de valeurs de mesure selon l'une des revendications 1 à 7, caractérisé par le fait que sur la paroi latérale extérieure (11) du tube de mesure (2) est prévue une piste conductrice (24) qui est reliée électriquement à la tige (13) d'une des électrodes de mesure (8), et s'étend sur à peu près la moitié de la périphérie, jusqu'à un point de liaison (15), disposé près de l'autre électrode de mesure (8), et destinée pour un fil conducteur qui mène à un capteur de valeurs de mesure.

9. Procédé pour fixer des électrodes de mesure (8) et autres éléments conducteurs d'électricité à un tube de mesure en céramique (2) d'un capteur de valeurs de mesure pour des débitmètres à induction magnétique, par fixation d'une tige (13), pour chaque électrode de mesure (8), suivant une position radiale par rapport au tube de mesure (2), caractérisé par le fait que la tige (13) de chaque électrode de mesure (8) est disposée radialement dans une ébauche non cuite constituée par une matière céramique brute, en particulier pour une céramique oxydée, et est emprisonné par frittage lors de la cuisson céramique de l'ébauche, et qu'ensuite on dépose sur le tube de mesure céramique fritté (2) une pâte d'une poudre métallique, sous la forme de pistes conductrices (21, 23, 24), après quoi ladite pâte de poudre métallique est fixée par cuisson à l'aide d'un nouveau chauffage du tube de mesure (2).

10. Procédé selon la revendication 9, caractérisé par le fait que l'on utilise, pour les électrodes de mesure (8) et pour les tiges (13) du platine ou un alliage à base de platine, et pour les pistes conductrices (21, 23, 24) une pâte à base de poudre de platine.

11. Procédé selon la revendication 9 ou 10, caractérisé par le fait que le tube de mesure (2) est constitué par de l'oxyde d'aluminium fritté de façon compacte, et par le fait que les tiges (13) sont emprisonnées par frittage, à peu près à 1 800 °C, alors que que la pâte à base de poudre de platine est fixée par une cuisson qui est opérée à des températures d'environ 800 °C.

12. Procédé selon l'une des revendications 9 à 11, caractérisé par le fait que l'ébauche non cuite du tube de mesure (2) est moulée dans un moule à piston ou de façon isostatique, des perçages radiaux étant ensuite prévus pour l'insertion des tiges (13).

0 080 535

Fig.1

Fig.2

Fig.3

Fig.4

Fig.5

Fig.6